# EUROPEAN PATENT APPLICATION

(11) **EP 3 595 410 A2**
(43) Date of publication of application: **15.01.2020**
(21) Application number: 19152237.4
(22) Date of filing: 15.03.2019
(51) Int. Cl.: H05B 6/68, H05B 6/64, H05B 6/70, H05B 6/74

(54) **METHOD AND APPARATUS FOR PROVIDING MICROWAVE STIMULATION TO A HEATING CAVITY**

(30) Priority: 02.02.2018 SI 201800025
(71) Applicant: Univerza V Mariboru, 2000 Maribor (SI)
(72) Inventor: KRAMBERGER, Iztok, 2000 Maribor (SI); KIRBI , Gregor, 2242 Zgornja Korena (SI); ERKER, Matic, 2321 Makole (SI); BRUS, an, 2000 Maribor (SI); FERLE, Aleksei Nino, 2000 Maribor (SI); SEL AN, David, 2000 Maribor (SI)
(74) Representative: Pipan, Marjan

(57) **Abstract**

A method and apparatus for providing microwave stimulation to a heating cavity are disclosed. The apparatus contains a heating cavity (102), a microwave generator (104) and a controller (103). The controller (103) is configured to control the microwave generator (104) by periodical sweeping of the oscillation frequency and providing output power control in a way of decreasing the output power at higher cavity reflected power amounts. The result of such a configuration is increased heating efficiency, better heating uniformity and shorter food preparation times.

## Description

A method and apparatus for providing microwave stimulation to a heating cavity are disclosed. The apparatus contains a heating cavity, a microwave generator and a controller. The controller is configured to control the microwave generator by periodical sweeping of the oscillation frequency and providing output power control in a way of decreasing the output power at higher cavity reflected power amounts.

The patent is categorised under section H 05B 6/64 of the Cooperative Patent Classification.

The technical problem, which the disclosed invention is trying to solve is providing a solution of fast active control over the microwave generator parameters for the need of accurately heating and measuring the load characteristics respectively.

Conventional solid-state microwave ovens consist of narrowband frequency stimulation devices, coupled together with a cavity resonating at multiple modes. Such solutions are either provided as a single feed or multiple feed system, where a single channel or multiple channel configuration can be used. In comparison with the standard magnetron stimulated cavity, currently available solid-state power units enable accurate frequency and power control. The latter solid-state power units are digitally controlled by external processing units and quite often lack in speed when it comes to measuring of cavity load characteristics and manipulation of microwave generator parameters. Due to the nature of the multiple mode cavities having a very broad range of optimal operating points spread over a large frequency band, and the problems described above, we can conclude that such a system will not perform optimally in terms of providing heating uniformity.

The presented invention represents the conclusion of research that no currently available solutions of microwave or combined ovens offer a quick enough way of actively changing the parameters of the microwave generator.

The patent application nr. US 9,717,116 B2 discloses a device that uses a method of tackling the problem of simultaneously providing a way of accurately measuring the cavity load characteristics and heating. The presented solution is limited by combining both a conventional magnetron unit as well as solid-state power supplies. We think that the combination of different types of microwave generators offers benefits of both technologies. Regardless of the benefits, the problems that are inherent to each individual technology remain present. The downside of such a solution is inadequate EM radiation parameter control at higher power levels.

The patent application nr. US 9,353,854 B2 discloses a device that uses a method of tackling the problem of simultaneously providing a way of accurately measuring the cavity load characteristics and heating with the use of a special control algorithm. The disclosed algorithm is configured in a way of providing energy only in discrete portions of the frequency spectrum where the heating reaches a sufficient efficiency for a time that is determined based on said efficiency. Such control methods are very promising but providing microwave stimulation into discrete frequency regions increases the change of developing hot spots and further increases the probability of suboptimal use.

The patent application nr. US 8,759,729 B2 discloses a device that uses a method of tackling the problem of simultaneously providing a way of accurately measuring the cavity load characteristics and heating with the use of a special control algorithm. The disclosed algorithm provides power over a wide frequency spectrum in a way of that the product of the output power and efficiency remaing constant over regions of interest. The downside of such an algorithm is that most of power is emitted at frequency where the efficiency is the lowest, resulting in longer preparation times and suboptimal use.

The above-mentioned solutions tackle the problem of non-uniform heating by actively changing the parameters of the microwave generator, but mostly limit themselves to the frequency. When an additional modulating element, mostly in form of a mode stirrer, is added the existing solution, the problem of measuring and determining the optimal operating point of the microwave generator scales in an additional dimension.

When taking all the mentioned deficiencies into account, one can determine that even though such heating algorithms are employed over longer periods of time (ranging in the two-digit minute range), the total time of measurement can reach levels from 10 up to 20% of the total preparation time.

Total heating duty cycle reduction not only represents loss of preparation time, but also manifests itself in lower average power output, as the measurements cannot be performed at power levels that are high enough for food preparation, resulting in even longer preparation times.

The final goal of the described invention is to provide an apparatus for providing microwave stimulation capable of mitigating the above stated deficiencies and disadvantages. This objective is achieved by the provision of an apparatus which includes a heating cavity, containing object to be processed, a microwave generator coupled to heating cavity and a controller used for controlling the microwave generator.

The apparatus for providing microwave stimulation to a heating cavity and the corresponding method for achieving the latter result is listed and described below, accompanied with references to their respective attached figures, of which:
- figure 1: is a cross-sectional view of an apparatus for microwave stimulation;
- figure 2: represents a block diagram of a preferred embodiment of the microwave stimulation providing apparatus from figure 1;
- figure 3a: represents a graph showing the relationship between voltage of the input signal and time used in the preferred embodiment of the present invention;
- figure 3b: is a graph showing the relationship between frequency, which is generated by the microwave oscillator based on the input signal from the previous figure, and time in accordance with an embodiment of the present invention;
- figure 4a: is a graph showing the relationship between reflected power and frequency for an example small load placed in the cavity, in accordance with an embodiment of the present invention;
- figure 4b: is a graph showing the relationship between gain, which is determined based on the reflected power values shown in figure 1, and frequency for an example small load placed in the cavity, in accordance with an embodiment of the present invention;
- figure 4c: is a graph showing the relationship between output power, which is determined based on the gain values shown in figure 4b, and frequency for an example small load placed in the cavity, frequency and in accordance with an embodiment of the present invention;
- figure 5: is a graph showing the relationship between output power, which is determined based on the gain values shown in figure 4b and frequency during startup, for an example small load placed in the cavity, in accordance with an embodiment of the present invention;
- figure 6a: represents a graph showing the relationship between the oscillation frequency and time during an example start up sequence, in accordance with an embodiment of the present invention;
- figure 6b: represents a graph showing the relationship between the desired power and time during an example start up sequence, in accordance with an embodiment of the present invention;
- figure 6c: represents a graph showing the relationship between the reflected power and time during an example start up sequence, in accordance with an embodiment of the present invention;
- figure 6d: represents a graph showing the relationship between the determined gain value and time during an example start up sequence, in accordance with an embodiment of the present invention;
- figure 6e: represents a graph showing the relationship between the output power and time during an example start up sequence, in accordance with an embodiment of the present invention;
- figure 7: represents a flow chart illustrating the control method of providing microwave stimulation, in accordance with an embodiment of the present invention.

Exemplary embodiments of the present invention are described in the following section. Together with the accompanied drawings they may be used as an example for conveying the scope of this invention and are not limited to the presented form. With reference to the accompanying drawings the advantages and features of the present invention will become apparent.

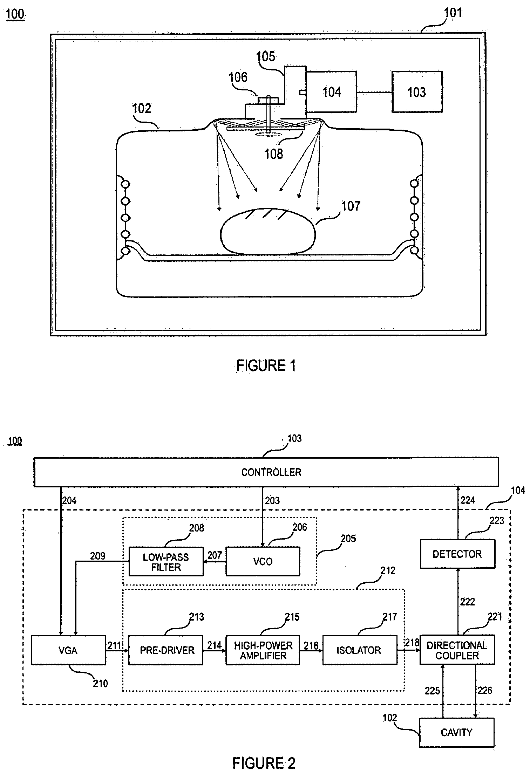

Referring to FIG. 1 of this invention, the cooking apparatus 100 is using microwave stimulation according to an embodiment of present invention and further contains a housing unit 101 used for providing structural support for the containing parts of the apparatus. A heating cavity 102 is used for providing a heating area for processing foodstuff 107. Another use of the heating cavity 102 lies in the field of electromagnetic (EM) radiation, where it is, preferably, used as a resonant cavity. A waveguide 105 is structurally and electrically coupled to the cavity 102, where it serves the purpose of guide the electromagnetic waves into the cavity and providing a stable mount position for the microwave generator 104. The microwave generator 104 is configured to provide microwave oscillation into the cavity while being controlled by the controller 103. Additional elements, such as a mode stirrer 108, coupled to a rotating shaft of a motor 106, may be used for impedance matching, while also enabling the use as a secondary source of field manipulation inside the cavity 102.

Although not portrayed in the drawings, additional radiant heating elements can be positioned inside the heating cavity 102, to provide a source of heating energy during food processing. Albeit not depicted, other food processing elements, such as hot steam sources (not shown) may find suitable use in conjunction with present invention.

The microwave generator 104 is most commonly in form of a high power solid-state microwave generator. This type of generator offers flexible generation of frequencies ranging up to 2500 MHz, with accurate power control, narrowband output spectrum characteristics and reasonable efficiency. As the most common used frequency bands for conventional ovens are found between frequencies from around 868 MHz to 2500 MHz, the suitability of solid-state amplifiers is more than apparent.

Meanwhile, an additional benefit that comes from accurate power control is the capability of using such a unit for output power calibration, which in turn enables the use of the described amplifier in a system for conducting accurate load characteristics measurements. While power levels of such generators might not reach power levels directly comparable to conventional magnetron-based generators, the additional advantages of flexible frequency, phase and power control outweigh the above described disadvantages.

FIG. 2 represents a block diagram of a preferred embodiment of the microwave stimulation providing apparatus depicted in FIG. 1.

The microwave generator 104 contains a small signal frequency source 205, a variable-gain amplifier 210, a final stage amplifier unit 212, a directional coupler 221 and a detector 223.

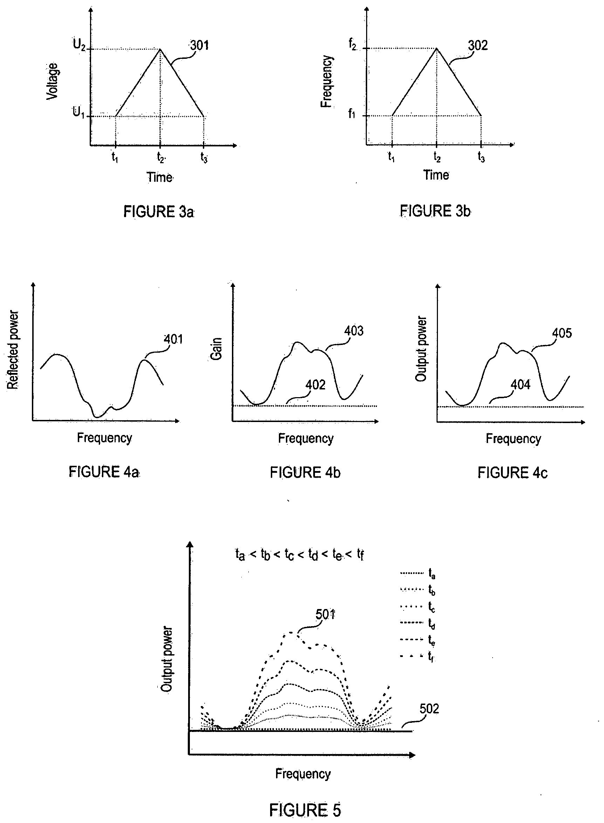

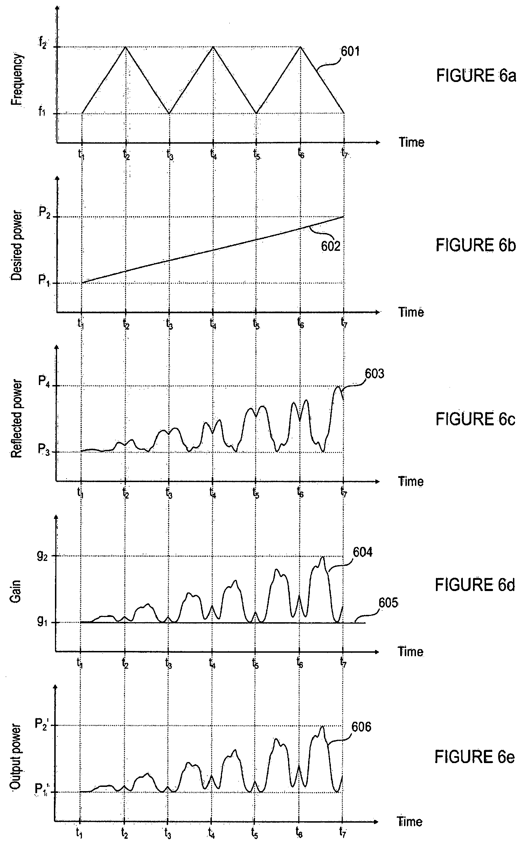

The small signal frequency source 205 comprises at least a voltage-controlled oscillator (VCO) 206. The voltage-controlled oscillator (VCO) 206 is used to output an oscillation frequency 209 based on the signal 203 coming from the controller 103. The output oscillation frequency 209 is usually swept in a continuous and periodic fashion, most commonly in form of a periodic triangle signal. The shape of controller signal 203 and resulting oscillation frequency 209 is depicted in detail in FIG. 3a and FIG. 6a

Some embodiments of the present invention may further comprise a small signal frequency source 205, containing an additional low-pass filter 208, which is used for removal of high frequency components from the voltage-controlled oscillator 206 output signal 207.

A variable-gain amplifier (VGA) 210 represents a core component of the microwave generator 104 since it is used for manipulating the amplitude of the output signal 226. The small signal frequency source oscillation frequency 209 represents one input of the variable-gain amplifier 210. Another input represents the gain amount signal 204. At any given moment in time the variable-gain amplifier output signal 211 represents an oscillation frequency oscillating with frequency determined by the input 209 and characterized by an amplitude set by the input 204.

The gain amount value 204 is first and foremost determined by the controller 103. Before this assessment the controller must gather information regarding the reflected power 225. This is done with the provision of a directional coupler 221 and detector 223. The final stage amplifier output signal 218 is passed though the directional coupler 221, where it is, at any given moment in time, coupled as the forward power output (not shown) of the directional coupler 218, before continuing as the signal 226 into the cavity 102. The directional coupler 221 provides similar action in the reverse direction, where the reflected power signal 225 coming from the cavity 102 is coupled, hereby denoted as the reflected power value 222, before finally passing into the detector 223. Further description of the presented signals during normal operation is given in the paragraph regarding FIG. 6a, FIG. 6b, FIG. 6c, FIG. 6d, FIG. 6e, FIG. 6f.

The detector 223 is configured to detect the amplitude of the incoming reflected power value signal 222 and pass the appropriate detected value as an output signal 224 to the controller 103.

The final stage amplifier unit 212 comprises at least a high-power amplifier 215. This amplifier is used for amplification of the variable-gain amplifier output signal 211 before outputting the higher power output signal 218 though the directional coupler 221, in form of the signal 226 into the cavity 102.

High power amplifiers come in form of transistors either arranged to work as a configuration of a single transistor or a configuration of multiple parallel transistors. Different power levels, ranging from 100W to 1kW can be reached in their respective configurations, but are often limited by cost and manufacturing technology.

Some embodiments of the present invention may further include an additional pre-driver element 213 located in rhe final stage amplifier unit 212. This addition is motivated for the purpose of increasing the variable-gain amplifier signal 211 to a higher power level, which is more suitable to certain implementations of high power amplifiers.

Further additions utilized by some embodiments may employ the use an isolator 217, located at the end of the final stage amplifier unit 212, in order to provide protection to the components on its input side from mismatched loads in the cavity 102.

Referring now to FIG. 3a and FIG. 3b, an example input signal 301 of thevoltage-controlled oscillator 206 represents one period of a triangle signal from t₁ and t₃ and ranging from a minimum voltage U₁ to a maximum voltage of U₂. The example signal 301 determines the example output oscillation frequency signal 302 and in this case limits the sweeping frequency to the lower frequency f₁ and upper frequency f₂.

With reference to FIG. 4a, FIG. 4b and FIG. 4c, according to an embodiment of the present invention, a set of reference figures regarding the power manipulation is provided.

FIG. 4a represents a figure showing the relationship between frequency and reflected power. The curve 401 represents a characteristic curve for an example small load placed in the cavity, in accordance with an embodiment of the present invention.

The relationship between the determined gain amount and frequency is depicted in FIG. 4b, containing the appropriately determined gain amount 403 directly corresponding to the inverse of the reflected power curve 401 offset by the gain bias curve 402.

FIG. 4c represents a figure showing the relationship between output power and frequency. The output power amount curve 405 represents the output power amount at a certain frequency, determined based on the gain curve 403, and in some implementations of the present invention also using the gain bias amount 402, directly corresponding to the power curve 404.

FIG. 5 represents a figure showing the relationship between output power and frequency, containing a set of characteristic curves 501, each representing the output power at a different time (denoted as ta, tb, tc, td, te and tf) during an example startup up sequence. The minimum output power amount 502 is determined by the gain bias and stays the same during the whole start up procedure.

The set of figures FIG. 6a, FIG. 6b, FIG. 6c, FIG. 6d and FIG. 6e, are provided to explain a typical startup procedure in accordance with an embodiment of the present invention.

With reference to FIG. 6a, a periodic triangle waveform 601 represents the sweeping oscillation frequency 209 of the voltage-controlled oscillator (VCO) 206 limited between frequencies f₁ and f₂. The signal reaches the maximum frequencies at times t₂, t₄, t₆, and minimum frequencies at times t₁, t₃, t₅, t₇. The respective one-way sweep time period, representing a full rise from either the minimum to the maximum frequency or fall from the maximum to minimum frequency remains constant during the entire operation of the preferred embodiment of this invention.

With reference to FIG. 6b, the desired power amount 602 determines the desired system output power. In this case, the output power represents a linear function, which is characterized by the minimum set desired power P₁ and maximum set power P₂. The end value of the desired power amount is reached during the time from t₁ and t₇. At any given moment in time, the value of the desired power curve is used to determine the appropriate gain amount 604, further depicted in FIG. 6d.

The next presented figure is FIG. 6c, which delineates the reflected power amount during the startup sequence. The provided graph containing a curve limited by the respective minimum power value P₃ and maximum power value P₄, together with any other power values, are not depicted to scale with FIG. 6b, FIG. 6c and FIG. 6e and are solely provided for easier clarification of the underlying controlling process.

The reflected power amount value is measured with the use of a directional coupler 211 and detector 223. The increasing desired power value 602 causes the system to output more power into the cavity 102 resulting in similarly higher reflected power amounts.

Providing energy at these regions can cause component damage, leading to system failure. It is therefore extremely important to understand the importance of having accurate and fast reflected power measurement capabilities in the system. The measured reflected power amount is used for the proper determination of the desired gain amount in FIG. 6d.

FIG. 6c shows the relationship between the controller determined gain and time during the startup sequence. The gain value at a given moment in time 604 is determined based on several other parameters including the desired power amount 602 and reflected power amount 603. Some embodiments may also provide ways of using an additional gain bias amount 605 that is used for setting the minimum output power amount. This minimum gain amount is used for providing the minimum required power at which the signal 222 captured by the detector 223 is still considered to be valid. The final gain amount 604 is usually determined by setting the gain to the desired gain level, offset by the gain bias value 605 and reduced by the gain value indicative of the measured reflected power amount.

With reference to FIG. 6e, the relationship between the system output power and time is depicted. The output power value 606 at any moment in time is determined based on the predetermined gain amount 604.

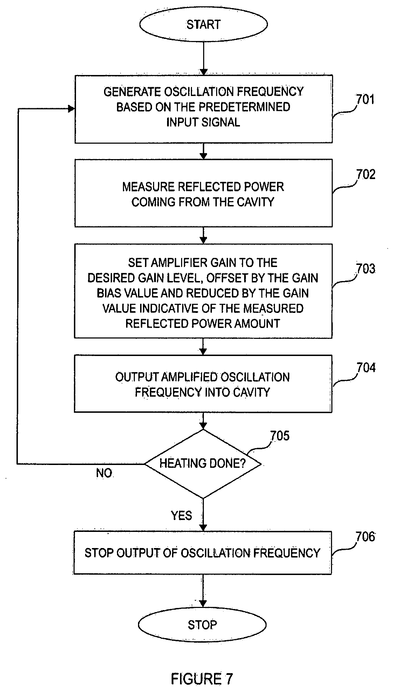

FIG. 7 represents a flow chart illustrating the control method of providing microwave stimulation, in accordance with an embodiment of the present invention.

With reference to FIG. 7, the first step of conduct 701 is the generation of the oscillation frequency based on the predetermined input signal. In accordance with an embodiment of the present invention, a small signal frequency source 205 to achieve this goal.

After that, the step 702 is used to acquire information about the coupled reflected power signal 222, coming from the cavity 102.

The next step 703 is used to determine the amplifier variable-gain amplifier 210 gain, based on the user desired gain level, general gain bias amount and previously mentioned reflected power value 225.

Thereafter in step 704, the amplified oscillation frequency 226 is output into the cavity 102.

The above described series of steps denoted under the numbers 701, 702, 703 and 704, are cycled until the heating procedure is not finished 705. This condition can either be fulfilled by a time limit, user action or any sensor triggered interrupt.

The steps from FIG. 7 are described a series of steps in order to provide a clear description of the underlying procedure. Practical examples of such a solution may provide a system that can be perceived as continuous, where multiple steps may be occurring concurrently. An electronic analog loop may be one of the candidates suitable for such an implementation, offering a seemingly continuous operation of the process, differentiating itself from mostly slower counterparts relying on digital processing.

As implied in the previous paragraph, the importance of the system reaction speed remains a crucial in enabling such a system to perform advantageously towards existing solutions in terms of providing better heating uniformity and heating efficiency. This fact becoms more apparent with the additional of secondary field manipulation devices, such as mode stirrers.

The use of the described embodiment of the present invention enables very short measurement times, often as fast as 10.000-times per second, which in turn enables fast determination of the optimal heating point in even more complex systems that benefit from the use of a mode stirrer. This speed may seem unnecessary to the eye of a common observer, but since the heating conditions inside the cavity are very sensitive to the stirrer angle, solutions like these become necessary.

## Claims

1. An apparatus for providing microwave stimulation to a heating cavity comprosing a microwave generator (104), which comprises a frequency source (205), directional coupler (221), detector (223), variable-gain amplifier (210), final stage amplifier unit (212) and controller (103) used for controlling the frequency of the frequency source (205) and gain of the variable-gain amplifier (210), **characterized in that,** the controller (103) is configured to set the amplifier (210) gain to the desired gain level reduced by the gain value indicative of the measured reflected power amount (603) and peiodically controlling the frequency source (205) output frequency.

2. An apparatus for providing microwave stimulation according to claim 1, **characterized in that,** said apparatus includes an additional radiant energy heating element for providing energy to the processed foodstuff.

3. An apparatus for providing microwave stimulation according to claim 1, **characterized in that,** said apparatus includes gain biasing means that determine the minimum gain bias amount of the variable-gain amplifier (210).

4. An apparatus for providing microwave stimulation according to claim 1, **characterized in that,** said microwave generator frequency source (205) in the microwave generator (104) further contains a low-pass filter.

5. An apparatus for providing microwave stimulation according to claim 1, **characterized in that,** the final stage amplifier unit (212) includes a pre-driver amplifier (213), used for amplifying the signal coming from said variable-gain amplifier (210) to a power level suitable to be used in the high-power amplifier (212).

6. An apparatus for providing microwave stimulation according to claim 1, **characterized in that,** the final stage amplifier unit (212) includes an additional isolator (217) used for shielding the components on its input side from mismatched loads.

7. An apparatus for providing microwave stimulation according to claim 1, **characterized in that,** said apparatus includes an additional mode stirring element, provided for the manipulation of the electromagnetic field inside the cavity (102).

8. An operating method for providing microwave stimulation to a heating cavity, **characterised in that,** the method of providing microwave comprises the following steps:
| | |
|---|---|
| step 1: | generating an oscillation frequency based on the predetermined input signal; |
| step 2: | measuring the reflected power coming from the cavity (102); |
| step 3: | setting the variable-gain amplifier (210) gain to the desired level, offset by the gain bias value and reduced by the gain value indicative of the measured reflected power amount; |
| step 4: | stimulating the cavity (102) with the previously created signal; |
| step 5: | stopping the stimulation of cavity (102), if the condition for ending the heating procedure is reached. |

9. An operating method for providing microwave stimulation to a heating cavity according to claim 8, **characterised in that,** the condition for stopping the stimulation is fulfilled by reaching the end of a timer.

10. An operating method for providing microwave stimulation to a heating cavity according to claim 8, **characterised in that,** the condition for stopping the stimulation is fulfilled with an user set stop command.

11. An operating method for providing microwave stimulation to a heating cavity according to claim 8, **characterised in that,** the condition for stopping the stimulation is fulfilled by the external sensor measuring a certain physical quantity.
